Europäisches Patentamt

European Patent Office

Office européen des brevets

(11) Publication number: **0 182 476 B1**

## EUROPEAN PATENT SPECIFICATION

(45) Date of publication of patent specification: **08.07.92**

(51) Int. Cl.5: **F04C 29/00**, F04B 41/02, F16L 5/02

(21) Application number: **85306805.4**

(22) Date of filing: **25.09.85**

(54) Compressor casing and method of manufacturing it.

(30) Priority: **27.09.84 JP 202743/84**

(43) Date of publication of application:
**28.05.86 Bulletin 86/22**

(45) Publication of the grant of the patent:
**08.07.92 Bulletin 92/28**

(84) Designated Contracting States:
**DE IT**

(56) References cited:
**JP-A-57 176 388**
**JP-A-59 131 781**

**Patent Abstracts Of Japan, unexamined applications, field M, vol. 6, no. 256, 15. December 1982**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Tahata, Masahiro c/o Patent Division**
**Toshiba Corp. Prin. Office 1-1, Shibaura**
**1-chome**
**Minato-ku Tokyo(JP)**
Inventor: **Washizu, Hirokazu c/o Patent Division**
**Toshiba Corp. Prin. Office 1-1, Shibaura**
**1-chome**
**Minato-ku Tokyo(JP)**

(74) Representative: **Muir, Ian R. et al**
**HASELTINE LAKE & CO. Hazlitt House 28**
**Southampton Buildings Chancery Lane**
**London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates generally to a closed type compressor for use in cooling, refrigeration or air-conditioning and, more particularly to, a closed type compressor which has an improved structure for coupling a refrigerant inducing or discharging pipe means to a cylindrical casing of the compressor.

A closed type compressor is constructed such that a compressor unit and an electric motor are housed in a hermetic casing. The closed type compressor is equipped with pipe means respectively for inducing or discharging refrigerants or coolants from or to foreign devices, e.g., evaporaters. The casing of the compressor generally has a cylindrical side wall, and at least one of the inducing pipe and the discharging pipe is often needed to be coupled to the compressor unit through the cylindrical side wall of the casing.

Usually, the casing is made of steel, while the pipes are made of copper. A coupling of the copper pipe to the steel casing has been made with the aid of a pipe joint made of steel for the sake of welding and mechanical strength between the parts. The pipe joint comprises a cylinder portion, the inside wall of which fits closely to the outside wall of the copper pipe, and a tapered flare portion extending from one end of the cylinder portion. The pipe joint is attached to the cylindrical side wall by fitting its cylinder portion into a circular aperture defined in the cylindrical side wall of the casing from the inside thereof and engaging the flare portion with an aperture wall, defining the circular aperture, of the side wall. The pipe joint is then gas-welded to the cylindrical side wall around the aperture wall by resistance welding. The pipe is soldered to the inside wall of the cylinder portion of the pipe joint with soldering brass or soldering copper.

This conventional closed type compressor had a drawback that the welding of the pipe joint to the cylindrical side wall of the casing was sometimes made leaving unwelded gaps between them. Because the tapered flare portion of the pipe joint is unable to contact all the circular aperture wall perpendicularly of the cylindrical side wall of the casing, due to the fact that the side wall of the casing is cylindrical while the flare portion of the pipe joint is conical, there are some unwelded sections left at gaps between the circular aperture wall and the flare portion of the pipe joint. The unwelded gaps damage the hermetic sealing of the casing so as to cause a leakage of the coolant. Furthermore the unwelded portions reduce the mechanical strength of the coupling between the casing and the pipe joint.

Resistance welding or ring projection welding is practised by flowing an electric current to a resistive contact portion between the members to be welded together. The current flowing in the resistive contact generates a large quantity of heat which melts the contact portion. The heat quantity Q in resistance welding is given by the following equation.

$$Q = 0.24.I^2.R.t$$

where I is the current, R is the resistance at the contact, portion including internal resistances of both members to be welded together, and t is the time the current flows.

The above described resistance welding is practised for the contact portion between the casing and the pipe joint by pressing electrodes of a resistance welding machine against the casing and the pipe.

Japanese laid-open patent specification 57-176388 discloses a method of fitting a pipe through a wall of a compressor in which a collar round the pipe is attached to the pipe by brazing and is joined to the wall by electric resistance welding. The collar has a cylindrical part that fits loosely in a hole in the wall and is enlarged by a sloped part so that it does not pass through the hole, and the enlarged part has a flange surface at right angles to the axis of the cylindrical part to serve as a contact face for the resistance welding electrode.

Resistance welding has the feature that the welding is easily applied in an automated manufacturing process so that manufacturing cost is reduced. However, it has a drawback that the welding is limited in its application by requiring a matching state between shapes of members to be welded together. To overcome the drawback in the field of manufacturing closed type compressors, some methods have been conventionally used for ensuring a sufficient contact between a pipe joint and a casing. In one method, for example, the cylindrical side wall has been reshaped flat at its portion around the aperture for receiving the pipe joint. In another method, the portion of the cylindrical side wall around the aperture wall has been burred so that this portion is shaped cylindrically. However, these conventional methods have had the drawback that the process of flattening or burring is added to the other manufacturing processes and causes an increase of the costs of manufacturing the closed type compressor.

US-A- 3 209 991 discloses an arrangement for attaching a pipe through a cylindrical wall of a compressor using a pipe joint in the form of a connector tube or sleeve having a cylindrical portion and an expanded portion having a flared end portion that will not pass through the hole. The attachment is made by brasing the expanded portion to the wall around the hole, thereby sealing the joint.

2

There has been a further conventional method for coupling a pipe with a cylindrical side wall of a compressor casing. In this method, the pipe is fitted into an aperture for receiving the pipe without using a pipe joint and then gas-welded directly to the aperture wall with soldering silver. However, this method has the drawbacks that gas-welding with soldering silver is very expensive compared with the cost of resistance welding with a pipe joint, and that soldering silver is more expensive than soldering copper or soldering brass. Gas-welding of the pipe directly to the aperture wall with soldering silver has also, of course, the drawback that gas-welding is difficult to apply in an automated manufacturing process.

The present invention provides an improved method of assembling a metal pipe joint in an aperture in a wall of a metal compressor casing, and an improved compressor casing having a pipe joint passing through an aperture in a wall thereof, having the features set forth in claims 1 and 2 respectively.

As set forth in these claims, the joint is made in a cylindrical wall of the casing by resistance welding and the aperture in the wall is shaped such that the projection of its perimeter on to a plane perpendicular to the centre line of the aperture is a closed curve having a major axis and a minor axis, such that when the widened portion of the joint abuts the wall prior to bonding its conical outer surface and the perimeter of the aperture meet with effectively no gaps therebetween. For the sake of simplicity, this curve will hereinafter be referred to as an oval.

For a better understanding of the present invention reference will now be made, by way of example, to the accompanying drawings, in which:-

Figure 1 is a cross section of an embodiment of a closed type compressor according to the present invention;

Figure 2 is an enlarged section showing a part of Figure 1;

Figure 3 is a flat projection of an aperture 121 in Figure 2;

Figure 4 is a section taken along the line A-A' of Figure 2;

Figure 5 is a graphical representation showing the relationship between the cylindrical side wall 12, the pipe joint 24 and the aperture 121 of Figure 4;

Figure 6 is a section showing a modification of the pipe joint; and

Figure 7 is a section showing another modification of the pipe joint.

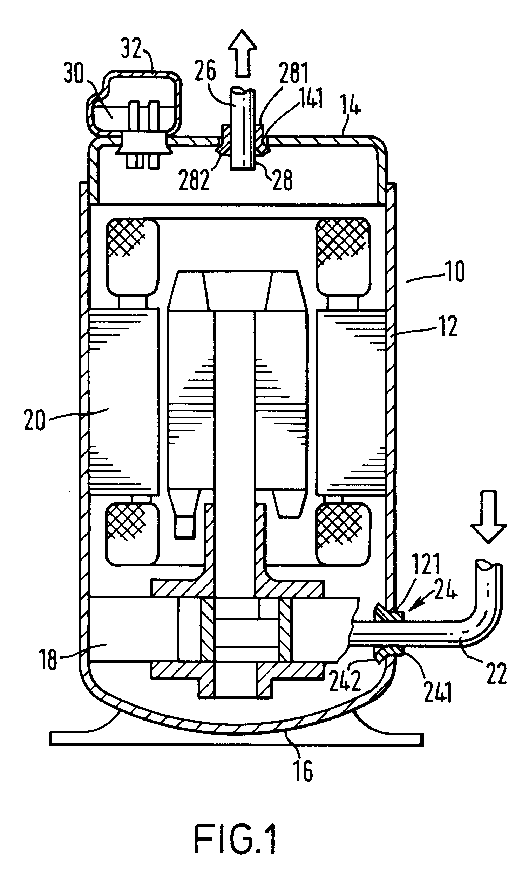

The present invention will now be described in detail with reference to the accompanying drawings, namely, Figures 1 to 7. Throughout the drawings, like reference numerals and letters are used to designate like or equivalent elements for the sake of simplicity of explanation.

Referring now to Figure 1, there is shown an embodiment of a closed type compressor according to the present invention. In the drawing, a casing 10 is comprised of a cylindrical side wall 12 made of steel, a flat top end wall 14 made also of steel attached hermetically to a top end of the cylindrical side wall 12 for closing the top end thereof and a spherical bottom end wall 16 formed in one piece with the cylindrical side wall 12 for closing the bottom end of the cylindrical side wall 12. The casing 10 houses hermetically a compressor unit 18 and an electric motor 20 for driving the compressor unit 18. The cylindrical side wall 12 of the casing 10 has an oval aperture 121. The oval aperture 121 receives a pipe made of copper, e.g., a coolant inducing pipe 22 made of copper through a pipe joint 24 made of steel. Further, the flat top end wall 14 also contains an aperture 141 but of a circular form. The circular aperture 141 also receives another pipe made of copper, e.g., a coolant discharging pipe 26 through another pipe joint 28 made also of steel. The pipe joints 24 and 28 are respectively applied to the aperture walls 122 and 142 through the inside of the casing 10 and then welded to the cylindrical side wall 12 and the flat top end wall 14 by the aforementioned resistance welding method. The coolant inducing pipe 22 and discharging pipe 26 are respectively fitted into the pipe joints 24 and 28 and then gas-welded thereto with soldering copper or soldering brass.

The pipe joints 24 and 28 are shaped into a funnel-like shape comprising respectively cylindrical portions 241, 281 and tapered or conical flare portions 242, 282 extending from respective one ends of the cylinder portions 241, 281. Respective outer conical surfaces of the flare portions 242, 282 are welded to the cylindrical side wall 12 and the flat top end wall 14 around the aperture walls 122, 142, whilst the coolant inducing pipe 22 and discharging pipe 26 are respectively fitted into the cylinder portions 241 and 281 of the pipe joints 24 and 28, and then gas-welded thereto with soldering copper or soldering brass.

In the top end wall 14 of the casing 10 there is mounted hermetically a terminal block 30 for supplying electric power to the electric motor 20. The portion of the terminal block 30 outside the casing 10 is covered by a terminal box 32.

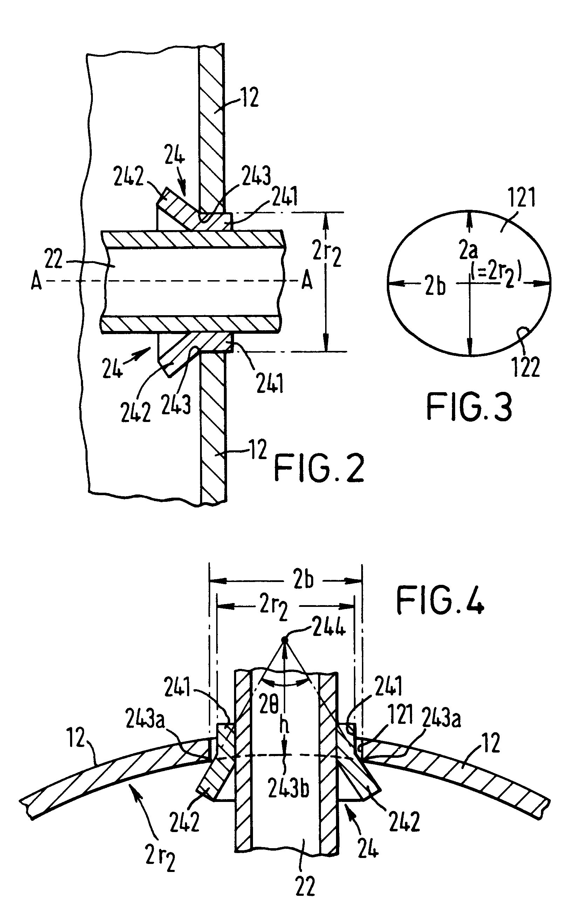

Referring now to Figure 2, there is shown the part of the closed type compressor in section where the inducing pipe 22 is fixed to the cylindrical side wall 12. The cylindrical side wall 12 contains the oval shaped aperture 121 as aforementioned. The major axis of the oval aperture 121 is directed perpendicular to the longitudinal axis of the cylindrical side wall 12 and the minor axis of the oval aperture 121 is directed parallel to this longitudinal axis. The minor axis is dimensioned to correspond with the outside diameter of the cylindrical portion 241 of the pipe joint 24, so that the cylindrical portion 241 of the pipe joint 24 fits to the aperture wall 122 of the oval aperture 121 at its two wall portions corresponding to the minor axis. The major axis is dimensioned as a function of dimensions of the inside diameter of the cylindrical side wall 12, the conical angle of the flare portion 242 of the pipe joint 24 and the minor axis of the oval aperture 121 as described later. A plan view of the oval aperture 121 is shown in Figure 3.

Referring back to Figure 2, the cylindrical portion 241 of the pipe joint 24 is inserted in the aperture 121 from inside the casing 10, so as to fit its outside surface to the two wall portions of the aperture wall 122, corresponding to the minor axis of the oval aperture 121, until a boundary 243 of the cylindrical portion 241 and the flare portion 242 of the pipe joint 24 engages with two inside edges of the aperture wall 122 along the minor axis of the oval aperture 121.

Referring now to Figure 4 which is a cross section taken along the line A-A' of Figure 2, another set of inside edges of the aperture wall 122, along the major axis of the oval aperture 121, engage with the outer surface of the flare portion 242 at portions separated a little from the boundary 243.

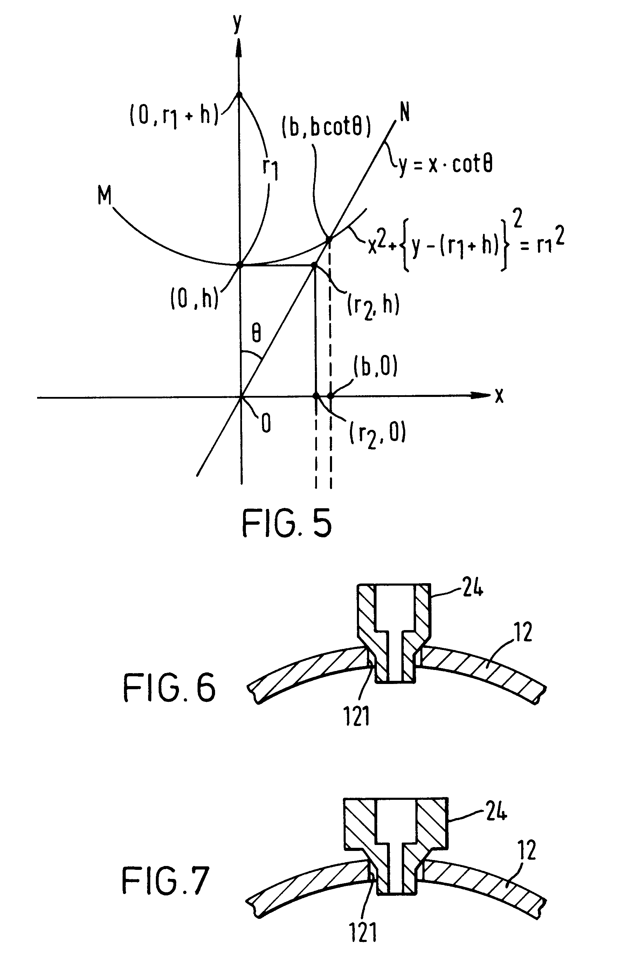

Referring now to Figures 4 and 5, the dimensions of the oval aperture 121, the major axis and the minor axis which are designed according to the inside diameter of the cylindrical side wall 12, the outside diameter of the cylindrical portion 241 of the pipe joint 24 and the conical angle of the flare portion 242 of the pipe joint 24, will be explained hereinafter in detail. Here the dimensions of the minor and major axes are presented as 2a and 2b as shown in Figure 3. The dimensions of the inside diameter of the cylindrical side wall 12, the outside diameter of the cylindrical portion 241 and the conical angle of the flare portion 242 of the pipe joint 24 are presented respectively as $2r_1$, $2r_2$ and $2\theta$ as shown in Figure 4.

The minor axis 2a is given as $2r_2$, since the minor axis is designed such that the minor axis is set to correspond with the outside diameter $2r_2$ of the cylindrical portion 241 of the pipe joint 24 for the reason already mentioned above.

Figure 5 shows a view graphically presenting a relation between the dimensions $2r_1$, $2r_2$ and $2\theta$ and the shape of the oval aperture 121 given from the dimensions using a coordinate system. In the drawing, an arc graph M presents a part of an internal wall of the cylindrical side wall 12, while a rectilinear graph N presents a ridge line of the flare portion 242 of the pipe joint 24. The origin $\theta$ of the coordinate system is set at an extrapolated conical top 244 of the flare portion 242 of the pipe joint 24 so that the graph N crosses the origin O and inclines at an angle $\theta$ with the Y coordinate. The center of the graph M has the coordinates $(0, r_1 + h)$, where h represents a height of the extrapolated conical top 244 from an extrapolated plane defined by the boundary 243 of the pipe joint 24 and h is given by an equation; $h = r_2.\cot\theta$.

In Figure 5, an equation of the graph M is given as follows;

$$x^2 + (y - (r_1 + h))^2 = r_1{}^2 \qquad (1)$$

while an equation of the graph N is given as follows;

$$y = x.\cot\theta \qquad (2)$$

An intersection of the graphs M and N represents the contact where the inside edges of the aperture wall 122 along the major axis of the oval aperture 121 meet with the outer surface of the flare portion 242 of the pipe joint 24. The equation (1) is then transformed as follows by substituting the $x \cot\theta$ of the equation (2) for the y of the equation (1);

$$x^2 + (x \cot\theta - (r_1 + r_2.\cot\theta))^2 = r_1{}^2 \qquad (3)$$

That is, the dimension 2b of the major axis of the oval aperture 121 is given as two times 2x of the solution x for the equation (3). The solution 2x is given as follows;

$$2x = \frac{2\cot\theta(r_1 + r_2\cot\theta) - \sqrt{K}}{1 + \cot^2\theta} \qquad \ldots\ldots (4)$$

where $K = 4\cot^2\theta(r_1 + r_2\cot^2\theta)^2 - 4(1 + \cot^2\theta)(2r_1 r_2\cot\theta + r_2{}^2\cot^2\theta)$.

Provided the angle $2\theta$ is 60°, i.e., $2\theta = 60°$, the equation (4) is simplified as follows;

$$2x = \sqrt{3}(r_1 + \sqrt{3}r_2) - \sqrt{3r_1^2 - 2\sqrt{3}r_1r^2 - 3r_2^2} \quad \dots (5)$$

From the equation (4), an actual dimension of the major axis 2b is obtained by setting the dimensions $r_1$ and $r_2$ to respective prescribed values. Following table shows some exemplified values of the dimensions $r_1$ and $r_2$ and the corresponding actual dimensions 2b.

$( 2\theta = 60 )$

| $2r_1$ (mm) | $2r_2$ (mm) | 2b (mm) |
|---|---|---|
|  | 15.9 | 16.55 |
| 123.41 | 19.1 | 20.05 |
|  | 22.2 | 23.51 |
|  | 15.9 | 16.63 |
| 110.35 | 19.1 | 20.17 |
|  | 22.2 | 23.68 |

The major axis 2b for any values of other dimensions; $2r_1$, $2r_2$ and $2\theta$ can be, of course, obtained from the general formula (4) concerning the solution 2x.

According to the above structure of the compressor, aperture wall 122 of the oval aperture 121 is compensated in its curvature to meet the outer surface of the flare portion 242 so that the aperture wall 122 is able securely to contact its whole edge with the outer surface of the flare portion 242 of the pipe joint 24 substantially without leaving any air gaps between them. Therefore, the aperture wall 122 of the cylindrical side wall 12 and the flare portion 242 of the pipe joint 24 are able to be securely welded by resistance welding as aforementioned and the welded portion is saved from the defect of gas leaking due to air gaps.

In the above embodiment, the closed type compressor of the present invention does not require any further manufacturing process such as the flattening or burring of the cylindrical side wall around the aperture wall which are needed in the conventional process. Also, the coupling of the pipe joint to the cylindrical side wall does not require expensive gas welding with soldering silver. Therefore, the closed type compressor of the present invention is able to be manufactured without inviting substantial increase of costs and processes of manufacture.

The same result is also obtained if the pipe joint 24 is coupled outside the cylindrical side wall 12, instead of the above described embodiment in which the pipe joint 24 is coupled from inside the cylindrical side wall 12. In this case, however, the oval aperture 121 has to be directed so that the major axis of the oval aperture 121 is parallel to the longitudinal axis of the cylindrical side wall 12 of the casing 10 and the minor axis is perpendicular to this longitudinal axis.

Further, the pipe joint 24 is not limited to the shape of the above embodiment. For example, the pipe joints 24 as shown in Figures 6 and 7 may be used.

As described above, the present invention may provide a closed type compressor in which a pipe joint is coupled securely to the cylindrical side wall of the casing without inviting any leakage and increase of manufacturing costs thereof, by shaping the aperture, for receiving the pipe joint in the cylindrical side wall, in an oval form.

**Claims**

1. A method of assembling a metal pipe joint (24) in a wall (12) of a metal compressor casing comprising the steps of:
    making an aperture (121) in the wall (12);
    forming the pipe joint (24) with a narrow body portion (241) which can pass through the aperture and a widened body portion (242) which is too large to pass through the aperture;

inserting the narrow body portion of the joint in the aperture such the widened portion abuts against the wall (12); and

bonding the pipe joint (24) to the wall (12) by resistance welding;

the widened portion (242) having a conical outer surface, the cone angle whereof and the dimensions of the aperture (121) being predetermined such that when the widened portion abuts the wall the conical outer surface and the perimeter of the aperture meet with effectively no gaps therebetween;

characterised in that

the wall (12) is a cylindrical wall of the casing and that the projection of the perimeter of the aperture (121) on to a plane perpendicular to the centre line of said aperture is a closed curve having a major axis and a minor axis.

2. A compressor casing having a metal wall (12) and a pipe joint (24) with a narrow body portion (241) passing through an aperture (121) in said wall, the pipe joint being bonded to the wall by resistance welding and having a widened body portion (242), the outer surface of which contacts the wall, the widened portion (242) having a conical outer surface, the cone angle whereof and the dimensions of the aperture (121) being predetermined such that when the widened portion abuts the cylindrical wall prior to bonding the conical outer surface and the perimeter of the aperture meet with effectively no gaps therebetween,

characterised in that

the wall (12) is a cylindrical wall of the casing and that the projection of the perimeter of the aperture (121) on to a plane perpendicular to the centre line of said aperture is a closed curve having a major axis and a minor axis.

3. A method according to claim 1 or a compressor casing according to claim 2, wherein said pipe joint (24) is comprised of a cylindrical portion (241) and a cone-shaped portion (242) extending from one end of said cylindrical portion.

4. A method or compressor casing according to any preceding claim wherein the cone-shaped portion (242) of the joint (24) is fitted into the aperture (121) from the inside of the cylindrical wall, with the cone width narrowing in the direction from inside to outside of the casing and with the major axis of said projection of the aperture being in a plane at right angles to the longitudinal axis of the cylinder casing.

5. A method or compressor casing according to any of claims 1 to 4 wherein the cone-shaped portion of the pipe joint (24) is fitted into the aperture (12) from the outside of the cylinder wall, with the cone width narrowing in the direction from outside to inside of the casing and with the major axis of said projection of the aperture being parallel with the longitudinal axis of the cylindrical casing.

**Revendications**

1. Un procédé d'assemblage d'un joint de tuyau métallique (24) dans une paroi (12) d'un carter de compresseur métallique comprenant les opérations de :

réalisation d'une ouverture (121) dans la paroi (12) ;

formation du joint de tuyau (24) avec une partie de corps étroit (241) qui peut traverser l'ouverture et une partie de corps élargie (242) qui est trop large pour traverser l'ouverture ;

insertion de la partie de corps étroit du joint dans l'ouverture, de telle manière que la partie élargie vienne en butée contre la paroi (12) ; et

liaison du joint de tuyau (24) à la paroi (12) par soudage à résistance ;

la partie élargie (242) présentant une surface externe conique, l'angle de conicité de cette dernière ainsi que les dimentions de l'ouverture (121) étant déterminés à l'avance de manière que, lorsque la partie élargie vient en butée contre la paroi, la surface externe conique ainsi que le périmètre de l'ouverture se rencontrent sans présenter effectivement d'intervalle entre eux ;

caractérisé en ce que

la paroi (12) est une paroi cylindrique du carter et en ce que la projection du périmètre de l'ouverture (121) sur un plan perpendiculaire à l'axe de ladite ouverture est une courbe fermée présentant un axe majeur et un axe mineur.

**2.** Un carter de compresseur présentant une paroi métallique (12) et un joint de tuyau (24) avec une partie de corps étroit (241) traversant une ouverture (121) formée dans ladite paroi, le joint de tuyau étant relié à la paroi par soudage à résistance et présentant une partie de corps élargie (242) dont la surface externe vient en contact de la paroi, la partie élargie (242) présentant une surface externe conique, l'angle de conicité de cette dernière ainsi que les dimensions de l'ouverture (121) étant déterminés à l'avance de manière que, lorsque la partie élargie vient en butée contre la paroi cylindrique avant la liaison, la surface externe conique ainsi que le périmètre de l'ouverture se rencontrent sans présenter effectivement d'intervalle entre eux,
caractérisé en ce que
la paroi (12) est une paroi cylindrique du carter et en ce que la projection du périmètre de l'ouverture (121) sur un plan perpendiculaire à l'axe de ladite ouverture est une courbe fermée présentant un axe majeur et un axe mineur

**3.** Un procédé selon la revendication 1 ou un carter de compresseur selon la revendication 2, dans lequel ledit joint de tuyau (24) est composé d'une partie cylindrique (241) et d'une partie en forme de cône (242) s'étendant depuis une extrémité de ladite partie cylindrique.

**4.** Un procédé ou un carter de compresseur selon une revendication précédente quelconque, dans lequel la partie en forme de cône (242) du joint (24) est montée dans l'ouverture (121) depuis l'intérieur de la paroi cylindrique, la largeur du cône allant en se rétrécissant dans la direction depuis l'intérieur jusqu'à l'extérieur du carter et l'axe majeur de ladite projection de l'ouverture étant dans un plan à angle droit par rapport à l'axe longitudinal du carter cylindrique.

**5.** Un procédé ou un carter de compresseur selon l'une quelconque des revendications 1 à 4, dans lequel la partie en forme de cône du joint de tuyau (24) est montée dans l'ouverture (12) depuis l'extérieur de la paroi cylindrique, la largeur du cône allant en se rétrécissant dans la direction depuis l'extérieur jusqu'à l'intérieur du carter et l'axe majeur de ladite projection de l'ouverture étant parallèle à l'axe longitudinal du carter cylindrique.

**Patentansprüche**

**1.** Verfahren zum Montieren einer metallischen Rohrverbindung (24) in einer Wandung (12) eines metallischen Verdichtergehäuses mit folgenden Verfahrensschritten:
Herstellen einer Öffnung (121) in der Wandung (12),
Ausbilden der Rohrverbindung (24) mit einem engen Abschnitt (241), der die Öffnung durchdringen kann, und einem aufgeweiteten Abschnitt (242), der zu breit ist, um die Öffnung zu durchdringen,
Einsetzen des engen Abschnitts der Dichtung in die Öffnung derart, daß der aufgeweitete Abschnitt an der Wandung (12) zum Anschlag kommt, und
Verbinden der Rohrverbindung (24) mit der Wandung (12) durch Widerstandsschweißen,
wobei der aufgeweitete Abschnitt (242) eine konische Aussenfläche besitzt und der Scheitelwinkel dieser Außenfläche und die Abmessungen der Öffnung (121) so festgelegt sind, daß die konische Außenfläche und der Umfang der Öffnung effektiv ohne Bildung von Zwischenräumen zusammentreffen, wenn der aufgeweitete Abschnitt an der Wandung zum Anschlag kommt,
**dadurch gekennzeichnet,**
daß die Wandung (12) eine zylindrische Gehäusewandung ist
und daß die Projektion des Umfangs der Öffnung (121) auf eine zur Mittellinie der Öffnung senkrechte Fläche eine geschlossene Kurve ist, die eine große Achse und eine kleine Achse besitzt.

**2.** Verdichtergehäuse mit einer metallischen Wandung (12) und einer Rohrverbindung (24), die einen durch eine Öffnung (121) in der Wandung hindurchtretenden engen Abschnitt (241) aufweist und durch Widerstandsschweißen mit der Wandung verbunden ist und die weiterhin einen aufgeweiteten Abschnitt (242) besitzt, dessen Außenfläche die Wandung berührt, wobei der aufgeweitete Abschnitt (242) eine konische Außenfläche besitzt und wobei der Scheitelwinkel dieser Außenfläche und die Abmessungen der Öffnung (121) so festgelegt sind, daß die konische Aussenfläche und der Umfang der Öffnung effektiv ohne Bildung von Zwischenräumen zusammenstoßen, wenn der aufgeweitete Abschnitt an der Wandung zum Anschlag kommt,
**dadurch gekennzeichnet,**
daß die Wandung (12) eine zylindrische Gehäusewandung ist

7

und daß die Projektion des Umfangs der Öffnung (121) auf eine zur Mittellinie der Öffnung senkrechte Fläche eine geschlossene Kurve ist, die eine große Achse und eine kleine Achse besitzt.

3. Verfahren nach Anspruch 1 oder Verdichtergehäuse nach Anspruch 2 mit dem weiteren Merkmal, daß die Rohrverbindung (24) aus einem zylindrischen Abschnitt (241) und einem sich von einem Ende des zylindrischen Abschnitts aus erstreckenden konischen Abschnitt (242) besteht.

4. Verfahren oder Verdichtergehäuse nach einem der vorhergehenden Ansprüche mit dem weiteren Merkmal, daß der konische Abschnitt (242) der Dichtung (24) von der Innenseite der zylindrischen Wandung aus in die Öffnung (121) eingepaßt ist, wobei der Konus sich in Richtung von der Innenseite zur Außenseite des Gehäuses verengt und die große Achse der Projektion der Öffnung in einer Ebene liegt, die mit der Längsachse des zylindrischen Gehäuses einen rechten Winkel bildet.

5. Verfahren oder Verdichtergehäuse nach einem der Ansprüche 1 bis 4 mit dem weiteren Merkmal, daß der konische Abschnitt (242) der Rohrverbindung (24) von der Außenseite der zylindrischen Wandung aus in die Öffnung (121) eingepaßt ist, wobei der Konus sich in Richtung von der Außenseite zur Innenseite des Gehäuses verengt und die große Achse der Projektion der Öffnung parallel zur Längsachse des zylindrischen Gehäuses verläuft.

FIG.1

EP 0 182 476 B1

FIG.2

FIG.3

FIG.4

$(0, r_1 + h)$

$(b, b\cot\theta)$

N

$y = x \cdot \cot\theta$

$r_1$

M

$x^2 + \left\{y - (r_1 + h)\right\}^2 = r_1{}^2$

$(0, h)$

$(r_2, h)$

$\theta$

$(b, 0)$

x

0

$(r_2, 0)$

y

FIG. 5

FIG. 6

24

12

121

FIG. 7

24

12

121